# EUROPEAN PATENT APPLICATION

(11) **EP 1 055 856 A2**
(43) Date of publication of application: **29.11.2000**
(21) Application number: 00110402.5
(22) Date of filing: 16.05.2000
(51) Int. Cl.: F16L 9/12, F02M 37/00

(54) **Pulse damper**

(30) Priority: 27.05.1999 US 321283
(71) Applicant: ITT MANUFACTURING ENTERPRISES, INC., Wilmington, Delaware 19801 (US)
(72) Inventor: Burns, Paul D., Macomb, Michigan 48044 (US); Beans, Bruce D., Waterford, Michigan 48327 (US); Stieler, David C., Lake Orion, Michigan 48360 (US)
(74) Representative: Esser, Wolfgang

(57) **Abstract**

A pulse damper element for damping resonance pressure fluctuations in a fuel supply system for an internal combustion engine of a motor vehicle includes a mono wall or multi-layer tubing having a first region which is essentially uniform cross-sectional diameter and a second region which has a cross-section diameter differing from the essentially uniform cross-sectional diameter of the first region. The second region has at least one convolution continuously adjacent to the cylindrical wall of the first region.

## Description

### FIELD OF THE INVENTION

The invention is a pulse damper element for use to damp pulsating fluid flow and reduce pressure fluctuations in a fuel supply system for an internal combustion engine of a vehicle.

### BACKGROUND OF THE INVENTION

Fuel supply systems for an internal combustion engines can produce resonance pressure fluctuations varying as wide as 5 psi to 90 psi. Internal combustion engines and especially those featuring fuel injectors require a stabilized pressure, usually nominally around 50-60 psi. Pulse damper elements have been used in the prior art to damp the pressure fluctuations. These damper elements are usually disposed in the fuel line adjacent to the internal combustion engine.

One such damping element is disclosed in U.S. Patent No. 4,615,320 issued to Fehrenbach et al. on October 7, 1986. The damper element of this disclosure includes a damper diaphragm which is fastened in a damper housing and defines a fluid chamber on one side. A connection fining is disposed on the damper housing and inserted into a plug connection from the fluid flow cross section. The flow opening and fluid flow cross section are penetrated by a flow tube arranged to protrude therethrough and into which a first fuel line, which discharges into the fluid chamber is embodied. Between the flow tube and the wall opening, an annular second fluid line is embodied.

A damper element such as disclosed in the prior art requires a rigid housing to enclose a damper diaphragm. The rigid housing must be packaged for fit into a space limited engine compartment.

Therefore, it is desirable to provide a pulse damper element which requires smaller packaging and more flexibility for installation into an engine compartment.

### SUMMARY OF THE INVENTION

The present invention is an improved pulse damper for placement in a fuel line for an internal combustion engine in motor vehicles. The improved pulse damper includes a multi-layer or single layer tubing having an elongated cylindrical wall having an outer surface and inner surface parallel to the outer surface. The inner surface defines an essentially unobstructed circular interior opening extending longitudinally through the tube. The tubing includes a first region in which the cylindrical wall is essentially parallel to the longitudinal axis running coaxially through the cylindrical interior. The tubing includes another region continuous to the first region, wherein the other region includes at least one corrugation in the cylindrical wall. The corrugated region has a cross sectional diameter which varies depending on position with respect to the corrugations longitudinal length and has a diameter different from the essentially uniform cross section diameter of the first region. The varying diameter of the corrugated region is preferably greater than the diameter of the first region.

The convoluted or corrugated configuration of the tubular damper element of the subject invention dampens the resonance pressure fluctuation of the fluid passing through the system. The tubular damper element is particularly beneficial for use with a fuel supply system of an internal combustion engine when disposed adjacent to or approximate to the internal combustion engine.

Other objects, advantages and applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:
- Figure 1: is a sectional view through a piece of a tubular pulse damper of the present invention having a single layer of material;
- Figure 2: is a sectional view through a piece of the tubular pulse damper having two layers of material;
- Figure 3: is a sectional view through a piece of the tubular pulse damper having three layers of material;
- Figure 4: is a sectional view through a piece of the tubular pulse damper having four layers of material;
- Figure 5: is a sectional view through a piece of the tubular pulse damper having five layers of material;
- Figure 6: is a side view of the tubular pulse damper; and
- Figure 7: is a sectional side view of a portion of the tubular pulse damper having multiple layers of material.

### DESCRIPTION OF THE PREFERRED EMBODIMENT

The pulse damper shown in Figure 6 is a single or multi-layer tube 10 having a corrugated region, wherein the tube 10 replaces the current damper housing with the internal diaphragm for placement upstream and adjacent to the engine. The tubing 10 is preferably multi-layer and is configured as disclosed in U.S. Patent Nos. 5,284,184 and 5,469,892 incorporated herein by reference. The multi-layer tubing as used in the subject invention may further include the material configurations as disclosed in U.S. Patent Nos. 5,524,673 and 5,566,720 also incorporated herein by reference.

The tubing 10 of the present invention is defined by at least one corrugated region 12 located in its length to accommodate bending, flexing or twisting and further to damp the resonance frequency associated with fuel systems of internal combustion engines. The tubing 10 may also include a region 14 having an essentially uniform cross-section. The tubing 10 of the present invention may have an outer diameter up to 50mm. However, in application such as fuel lines and also in fluid recovery systems, outer diameters of up to 50.8mm (2 inches) are preferred.

The tubing 10 may have any suitable wall thickness as desired. However, in automotive systems such as in the fluid lines, wall thicknesses between 0.5mm and 2.5mm are generally employed with wall thicknesses of approximately 2.0mm being preferred for fuel lines. While it is within the scope of this invention to use a corrugated tubing 10 for the pulse damp element having a plurality of overlaying thermoplastic materials, the tubing 10 of the present invention generally has a maximum of five layers inclusive of the bonding layers.

The tubing of the present invention for the pulse damper element is made of a material which is suitable for use in motor vehicles and comprises a relatively thick outer layer which is nonreactive with the external environment and can withstand various shocks, vibrational fatigue and changes in temperature as well as exposure to various corrosive or degrative compounds to which it would be exposed through the normal course of operation of the motor vehicle. The tubing material will be discussed further hereinafter.

The single or multi-layer tube of the present invention is composed of an elongated cylindrical wall 18 which preferably has an essentially circular cross-section perpendicular to its longitudinal axis. The cylindrical wall 18 has an essentially uniform wall thickness throughout its length in circumference and is defined by an inner surface and an opposed outer surface. The inner surface defines an essentially cylindrical opening which extends longitudinally through the tubing of the present invention essentially coaxial to the longitudinal axis.

In the preferred embodiment, the cylindrical wall 18 of the multi-layer or singular tube comprises at least two distinct regions. The cylindrical wall has a first region 14 where the cylindrical wall 18 is essentially parallel to the longitudinal axis. Contiguous to the first region 14 is a second region 12 which is defined by at least one convolution 12 or corrugation in the cylindrical wall 18. As used herein, the term convolution is defined as an area of cylindrical wall which deviates from parallel to the longitudinal axis. This deviation can produce inner diameter which is between about 20 percent and 300 percent greater than the inner diameter of the first region at its maximum. In the preferred embodiment, the inner diameter of convolution is between 20 percent and 100 percent greater than the inner diameter of the first region 14.

The tubing configuration of the pulse damper of the present invention can have as many convolutions with any length of cylindrical tubing optionally interposed therebetween as would be necessary to accommodate varying engine requirements and packaging requirement. The geometry of the convolutions can be of any cross-sectional profile desired. Thus the convolutions may have angled, squared or sinusoidal profiles as desired. The pulse damper 10 of the present invention may be installed in the fuel line adjacent to the feed to the engine by connection means such as disclosed in U.S. Patent No. 5,090,745 and incorporated herein by reference. The connection means may include a compression sleeve 16 made of plastic material which does not relax at high temperatures such as 350°F so that a compressive pressure is maintained on the end of the tubular pulse damper 10 at elevated temperatures. Other conventional connection means that provide operative coupling to the fuel line may also be employed.

Testing has determined that when the convoluted tubing section 12 is placed just before the fuel feed to the engine, the resonance pressure fluctuation that may normally vary from 5psi to 90psi is damped to a nominal pressure of 50-60psi. Various lengths of convoluted tubing 12 placed in the fuel injection system prior to the fuel feed to the engine provided similar results. Therefore, the length of the convoluted tubing is primarily controlled by the underhood engine packaging requirements. One advantage of using a tube 10 having a convoluted region 12 as the pulse damper element includes less joints for connection than is required in the housing diaphragm of the prior art. In addition, the tube 10 of the present invention is less weight and is less costly to manufacture, assemble, and package into the vehicle. Further, after its use, the tube material can be recycled.

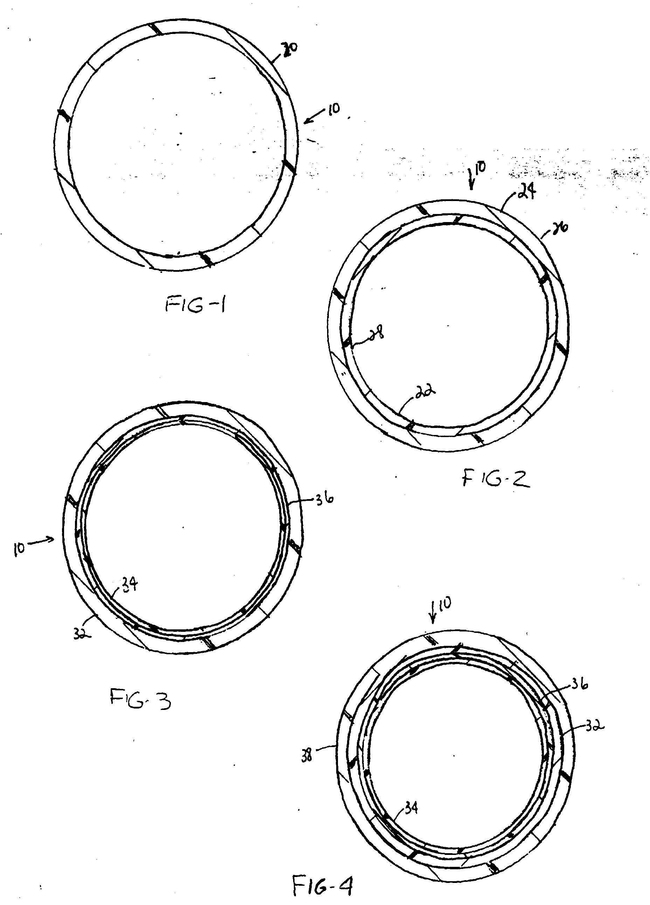

As discussed supra, the tubing may be a mono- wall tubing or a multi-layer tubing. A multi-layer tubing provides added advantages when carrying fuel in a fuel injection system. A typical mono-walled tubing 10, as shown in Figure 1, would have a single layer 20 constructed from a material such as a polyamide, such as Nylon 12, which provides a cold impact resistance of at least 2 foot pounds at -20°C.

The tube 10 of the second embodiment of the present invention, composed of the inner layer 22 and the outer layer 24 as shown in Figure 2, is suitable for use at an outer surface temperature range of about -40°C. and about 150°C., with a range of -20°C. being preferred. The tube 10 according to the second embodiment will have a tensile strength of no less than 15 N/mm² and an elongation value of at least 150% at 23°C. The tube 10 of the second embodiment has a burst strength at 23°C. and 120°C. of at least 20 bar and is sufficiently resistant to exposure to break fluid, engine oil and peroxides such as those which may be found in gasoline.

In the second embodiment, the layer 22 is positioned radially innermost of all succeeding layers. The inner layer 22 has an inner surface 28 oriented to come into direct contact with the fuel or gaseous material conveyed through the tube 10. The inner layer 22 is composed of a thermoplastic fluoropolymer which exhibits resistance to the components contained in conventional gasoline fuel mixtures including, but not limited to, alcohols such as methanol and ethanol, peroxides, short-chain hydrocarbons and the like. The fluoropolymer of choice employed in the present invention has a melt temperature between about 160° and 200°C.; and a melt temperature between about 165° and 180°C. being most preferred. The specific gravity of material employed in the first inner layer 12 is, between 1.95 and 1.98. The preferred fluoropolymer is a multi-component system having as its three major components an alkylene fluoropolymer, a material made from a fluoro-olefin monomer or monomers and a vinyl fluoride material. Such materials are reacted by a suitable process to form a terpolymeric material. Various terpolymeric materials are commercially available for use in coextrusion processes to form the tube 10 of the present invention. Selection of such material suitable for use would be within the purview of the skilled artisan after reading this disclosure.

The outer layer 24, and in particular, the outwardly oriented surface 26 is essentially non-reactive with the external environment and can withstand various shocks, vibrational fatigue, and changes in temperature as well as exposure to various corrosive compounds to which it would be exposed through the normal course of operation of the vehicle.

In the third, fourth and fifth embodiments of the present invention (Figures 3, 4 and 5 respectively), the inner layer 34 is integrally bonded to the inner surface of the thick outer polyamide layer 32. In the present invention, the inner layer 34 is a chemically dissimilar, permeation resistant, chemical resistant, fuel resistant thermoplastic material which is melt processible in normal ranges of extrusion, i.e. about 175°C. to about 250°C. By the term "chemically dissimilar" it is meant that the inner layer 34 consists essentially of a non-polyamide material which is capable of adhesion to a bonding layer 36 interposed between the thick outer layer 32 and the inner layer 34 in a manner which will be described subsequently.

In each of the embodiments, the thermoplastic material which comprises the inner layer 34 is a fluoroplastic material selected from the group consisting of a polyvinylidine fluoride, polyvinyl fluoride, polychlorotrifluoroethylene, ethylene tetrafluoroethylene copolymers, a graft copolymer of the preceding materials together with a fluoride-containing polymer such as copolymers of vinylidine fluoride and chlorotrifluoroethane, and mixtures thereof. Other material may be used for the inner layer 34 which is a fluoroplastic material as detailed in U.S. Patent No. 5,524,673.

In any of the disclosed embodiments, the tubing 10 of the present invention may also, optionally include an outer jacket or fourth layer 38 which surrounds the outer or third layer 32. The jacket 38 may be either co-extruded with the other layers during the extrusion process or may be put on in a subsequent process such as cross-extrusion. The outer jacket 38 may be made of any material chosen for its structural or insulating characteristics and may be of any suitable wall thickness. In the preferred embodiment, the outer jacket 38 may be made of a thermoplastic material selected from the group consisting of zinc-chloride resistant Nylon 6, Nylon 11, Nylon 12, polypropylene, and thermoplastic elastomers. If desired, these materials may be modified to include flame retardants, plasticizers, and the like.

In the third, fourth and fifth embodiments of the invention, the outer jacket 38 may, preferably, exhibit conductive characteristics in that it is capable of dissipation of electrostatic charge within a predetermined range. The material which composes the outer jacket 38 may be inherently conductive in these ranges or, preferably, include in its composition a conductive media in sufficient quantity to permit electrostatic dissipation in the predetermined range. The conductive media may be any suitable material of a composition and shape capable of effecting this static dissipation. The conductive material may be selected from the group consisting of elemental carbon, stainless steel, highly conductive metals such as copper, silver, gold, nickel and silicon, and mixtures thereof. The term "elemental carbon" as used herein is employed to describe and include materials commonly referred to as "carbon black." The carbon black can be present in the form of carbon fibers, powders, spheres, and the like.

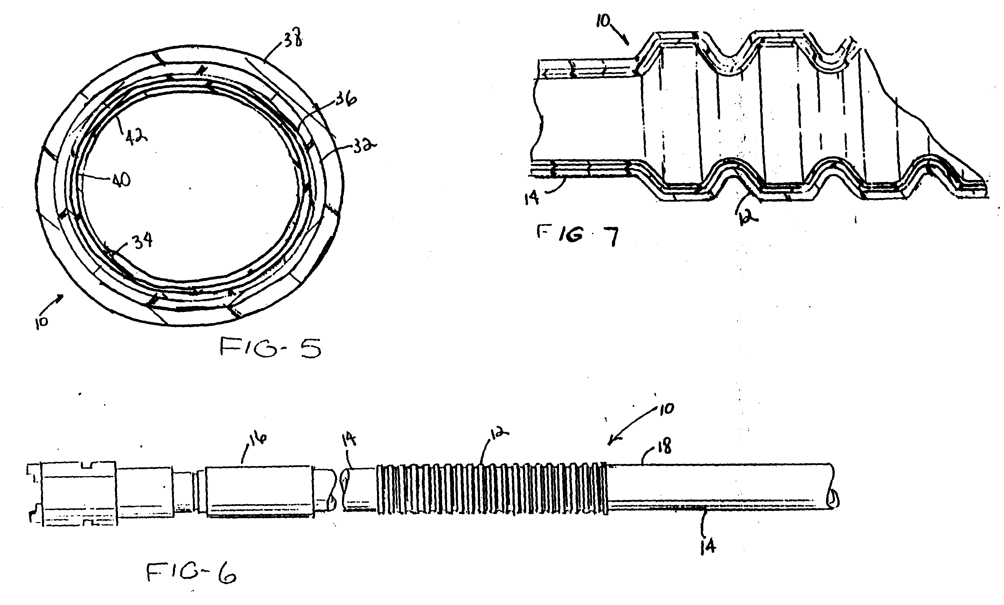

The inner layer 34 of the present invention according to the fifth embodiment, as illustrated in FIG. 5, may include an innermost electrostatic dissipation sub-layer 42 which is also capable of serving as a hydrocarbon barrier to assist in the prevention of permeation of aromatic and aliphatic compounds found in gasoline through to the outer layer 32 of the tubing 10 and, thus, out to the surrounding environment.

In the fifth embodiment, the electrostatic dissipation sub-layer 42 of the inner layer 34 may be integrally bonded to the inner surface of an optional sub-layer 40 disposed between sub-layer 42 and the intermediate bonding layer 36. Preferably, the sub-layers 40 and 42 are chemically similar materials in structure and composition. As used here, the term "chemically similar material" is defined as a thermoplastic material selected from the group consisting of polyvinylidine fluoride, polyvinyl fluoride, a graft copolymer of the preceding materials together with a fluorine-containing polymer such a copolymers of vinylidine fluoride and chlorotrifluoroethane, a copolymer of a vinyl fluoride and chlorotrifluoroethylene, the vinyl fluoride material selected from the group consisting of polyvinylidine fluoride, polyvinyl fluoride, and mixtures thereof; a copolymer of vinyl fluoride material and ethylene tetrafluoroethylene; and a non-fluorinated elastomer, and mixtures thereof. Preferably, the sub-layers 40 and 42 are composed of the same material, with the exception of the electrostatic dissipation sub-layer 42 including additional conductive material as described hereinafter. The sub-layers 40 and 42, intermediate bonding layer 36, outer layer 32 and jacket 38 define a five layer tubing 10. In the third, fourth and fifth embodiments, the inner layer 34 is composed of a thermoplastic material chemically dissimilar to the thermoplastic material employed in the outer layer 32 which is melt-processible in the normal ranges of extrusion, i.e. about 175°C. to about 250°C. The thermoplastic material employed in the inner layer 34 is capable of sufficiently permanent laminar adhesion to the intermediate bonding layer 36.

The material according to the fifth embodiment, also contains conductive media in quantities sufficient to permit electrostatic dissipation in a desired range. In the fifth embodiment, the electrostatic dissipation sub-layer 42 of the inner layer 34 exhibits electrostatic conductive characteristics capable of dissipating electrostatic charges in the desired range. Further details of the electrostatic dissipation sub-layer 42 are detailed in U.S. Patent No. 5,524,673.

In the third, fourth and fifth embodiments, the inner layer 34 is maintained at a thickness suitable to achieve a hydrocarbon permeation value for the tubing 10 of the present invention no greater than about 0.5 g/m² in a 24 hour interval. To accomplish this, the characteristics of the inner layer 34 can be relied upon solely or in concert with the intermediate bonding layer 36. It is anticipated that the thickness of the inner layer 34 and the intermediate layer 36 can be modified to accomplish this end. Other materials with their characteristics and advantages that are envisioned for use in the pulse damper element of the present invention are detailed in the patents incorporated herein by reference.

Thus, the present invention provides a mono or multi-layer tubing having a convoluted region for use as a damper element. The subject damper element can accommodate the introduction of various bends and contours during installation. The material is fuel resistant to fuel permeation and can permit dissipation of electrostatic discharge. Although described in the environment of a damper element for a fuel supply system, it is envisioned that the mono or multi-layer tubing having a convoluted region can be used as a damper element for other fluids and in other environments.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A pulse damper element for damping resonance pressure fluctuations in a fuel supply system for an internal combustion engine of a vehicle comprising:
a tubing (10) having a first and second region (14,12), the first region (14) having, an essentially uniform cross-sectional diameter and the second region (12) having a cross-sectional diameter which varies positionally depending on longitudinal location in the second region.

2. The pulse dampener of element of claim 1, wherein the tubing has a cylindrical wall (18) defining the cross-sectional diameter of the tubing and wherein the thickness of the cylindrical wall is essentially uniform along its longitudinal length.

3. The pulse damper element of claim 2, wherein the cylindrical wall has a single layer (20) of material.

4. The pulse damper element of claim 2, wherein the cylindrical wall has multi-layers of material (22, 24; 32, 34, 36; 38; 40).

5. The pulse damper element of claim 2, wherein the cylindrical wall (18) has at least one convolution.

6. The pulse damper element of claim 5, wherein the cross-sectional diameter of the convolution is between approximately 20% and 300% greater than the cross-sectional diameter of the first region (14).

7. The pulse damper element of claim 5, wherein the convolution has one of an angled, squared and sinusoidal longitudinal cross-sectional profile.

8. The pulse damper element of claim 5, wherein the cylindrical wall has an outer surface and an inner surface, wherein the outer surface is parallel with the inner surface.

9. The pulse damper element of at least one of claims 4 to 8, wherein the outer layer has conductive characteristics for dissipating electrostatic charge.

10. The pulse damper element of at least one of claims 4 to 8, wherein an inner layer of the cylindrical wall has conductive characteristics for dissipating electrostatic charge.

11. The pulse damper element of at least one of claims 4 to 10, wherein at least one layer of material serves as a hydrocarbon barrier.

12. The pulse damper element of claim 1, further including connection means (16) for connecting the pulse damper element in the fuel supply system proximate to the internal combustion engine.

13. A pulse damper element for a fluid passage system in a vehicle comprising: a tubing (10) having a cylindrical wall (18) wherein the cylindrical wall has at least one convolution.

14. The pulse damper element of claim 13, wherein said cylindrical wall has multi-layers of material (22, 24; 32, 34, 36; 38; 40)..

15. The pulse damper element of claim 14, wherein at least one layer of material of the cylindrical wall has conductive characteristics for dissipating electrostatic charge.

16. The pulse damper element of claim 14, wherein at least one layer serves as a hydrocarbon barrier.

17. The pulse damper element of claim 13, wherein the convolution has one of an angled, squared, and sinusoidal longitudinal cross-sectional profile.

18. The pulse damper element of claim 14, wherein the convolution has one of an angled, squared, and sinusoidal longitudinal cross-sectional profile.

19. The pulse damper element of claim 13, further comprising connection means for securely connecting the pulse damper element in the fluid passage system.
